# EUROPEAN PATENT APPLICATION

(11) **EP 0 744 597 A2**
(43) Date of publication of application: **27.11.1996**
(21) Application number: 96830288.5
(22) Date of filing: 21.05.1996
(51) Int. Cl.: G01G 13/24

(54) **Device for controlling the feeding of flowing material to a scale**

(30) Priority: 22.05.1995 IT BO950249
(71) Applicant: B.L. MACCHINE AUTOMATICHE S.p.A., I-40061 Minerbio(Bologna) (IT)
(72) Inventor: Vettorato, Natale, 40058 Malalbergo, Bologna (IT)
(74) Representative: Dall'Olio, Giancarlo

(57) **Abstract**

A device for controlling the feeding of flowing material to scales includes a pair of shutter gate means (6,7) for closing progressively a bottom discharge mouth (8) of a material conveying means (9) directed to underlying weighing means (2). The shutter gate means (6,7) are supported with a possibility of oscillating in opposite directions from a complete opening position, in which the discharge mouth (8) is open, to a complete closing position, in which the discharge mouth (8) is closed, and vice-versa, and features each one an indentation (24,25) extending symmetrically from a respective transversal edge. These indentations (24,25) define an orifice (26) for passage of flowing material (10) therethrough, with this orifice (26) thus having a variable cross-section.

## Description

The present invention relates to means for controlling the feeding flow of powder or granular materials to scales.

It is known that in various technical fields it is necessary to weigh quantities of powder or granular materials, or the like, which are subsequently directed to following packaging steps. Before actual weighing the material is batched while being directed to the scale.

At present, measuring devices are used, which include substantially a kind of hopper, equipped in its lower part with a movable bottom of a shutter gate type.

This bottom moves from a complete opening position, in which the hopper discharge mouth is opened, to a partial closing position, in which the bottom defines a calibrated hole that limits the outflow of the material from the hopper.

In the complete opening position, considerable amounts of the material outflow from the hopper and deposits on the underlying scale, on which it is continuously weighed by suitable loading cells.

In this way the material is fed at the maximum flow to the scale until it reached a weight that is close to the desired value.

Then, after moving the bottom shutter gate means to a position in which he discharge mouth is partially closed and the material outflow from the hopper is limited to a predetermined rate, feeding of the material is completed until the desired weight is obtained on the scales.

In fact, the scale loading includes two separate steps, with two different material feeding rates; partial closing of the bottom provokes a breakpoint between the two steps.

Nevertheless, the above mentioned devices do not guarantee the accuracy of the obtained weight.

Actually, while the bottom is being closed because the prefixed weight has been reached, a part of material is still depositing on the scales.

Therefore, it is necessary to anticipate the bottom closing so as to consider the material still being fed to the scale at the moment of closing.

In this way however, measuring of the material is never performed on the base of the actually weighed quantity.

Moreover, flowing of the material on the scales causes a perturbation of the measuring operation carried on by the loading cells, with a more or less sensible deviation with respect to the actual value.

Another disadvantage of the above mentioned measuring devices derives from the fact that the partial closing of the bottom determines asymmetric closing of the discharge mouth that consequently, in the final step of weighing, leads to the material loss of balance inside the scale. Also this can result in a deviation of the measured value with respect to the actual weight.

The object of the present invention is to propose an improved device that allows to feed scales with a perfectly measured quantity of material.

The above mentioned object is obtained in accordance with the content of the claims.

The characteristics of the invention will be better understood from the following description, with particular reference to the attached drawings, in which:
- Figure 1 shows a sectional schematic view of the measuring device, subject of the present invention,
- Figs. 2, 3, 4 and 5 show analogous views of this measuring device, in subsequent working steps;
- Figs. 6,7 and 8 show correspondent schematic plan views of the device, respectively in the working steps of Figs. 1, 2 and 3.

With reference to the above mentioned figures, numeral 1 indicates the device for controlling feeding of a scale 2, which include a container 3, closed at bottom by a couple of hatch doors 4 which can be opened to discharge the weighed material; the container 3 is hung on conventional loading cells 5, aimed at continuous weighing of the material fed to the scale 2.

The flow controlling device 1 includes a couple of shutter gate means 6,7 having an arc shape and being overlapped and concentric, the first inside the second.

These shutter gate means 6,7 close the discharge mouth 8 of a means 9 that conveys powder or granular material to be measured; the axis of the conveyor means 9, having rectangular section and being vertically supported by a fixed frame 11, coincide with the axis of the container 3 of the scale 2.

It may be of advantage to provide the discharge mouth 8 of the conveyor means 9 with the same circular profile as the shutter gate means 6,7.

The shutter gate means 6,7 can oscillate on a horizontal axle 12, situated on the median plane of the conveyor means 9; this axle 12 is fastened to respective sides 13,14 that delimit laterally the above mentioned shutter gate means 6,7. The sides 13, 14 face correspondent walls of the conveyor means 9.

The shutter gate means 6,7 are rotated, in opposite directions, by an actuator member 15, which includes e.g. a step motor controlled by a respective encoder.

This actuator member 15 operates a mechanism 16 that includes a couple of cranks 17,18 fastened, in diametrically opposite positions, to a shaft 19 carried horizontally by the frame 11; the cranks 17,18 are articulated to respective connecting rods 20,21 which drive the shutter gate means 6,7 via respective arms 22,23 extending from the sides 13,14.

The shutter gate means 6,7 features indentations 24,25 that extend symmetrically from a respective transversal edge and form on each gate means a kind of cusp, with the vertex thereof situated on the respective longitudinal median plane.

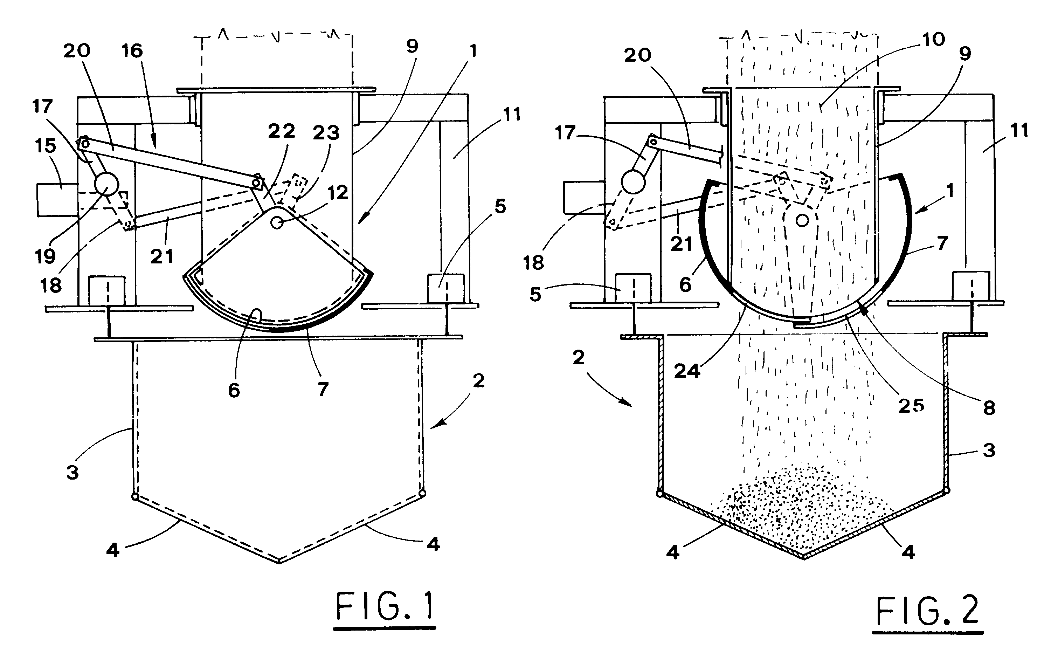

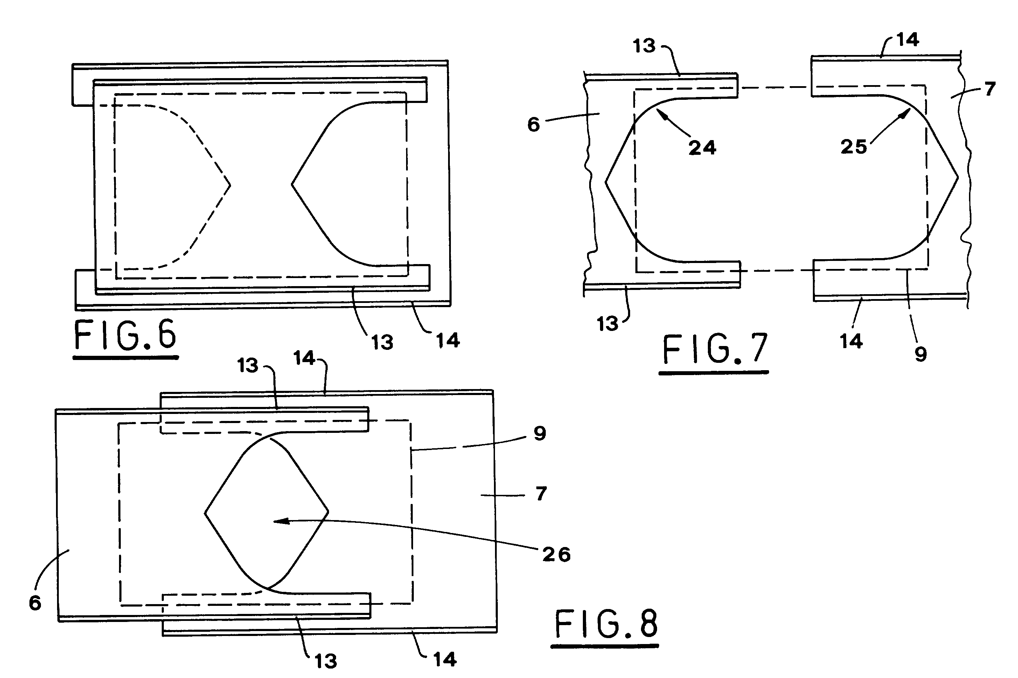

It is to be noted that in the position of complete closing of the conveyor means 9, the first shutter gate 6 is placed perfectly upon the second shutter gate 7, so as to cover reciprocally the respective indentations 24,25 (see Figs. 1 and 6).

Feeding of the material 10 to the scale is started by the mechanism 16 that drives the shutter gate means 6,7 so that they rotate in opposite directions until a suitable stop position is reached (Fig. 2).

In this position, the discharge mouth 8 of the conveyor means 9 is opened for feeding the scale with the material 10, since the indentations 24,25 of the shutter gate means 6,7 substantially coincide with the margins of this discharge mouth 8 (Fig. 7).

Thus an approximate measuring step is performed, in which the weight of the material 10 on the scales comes close to the desired value.

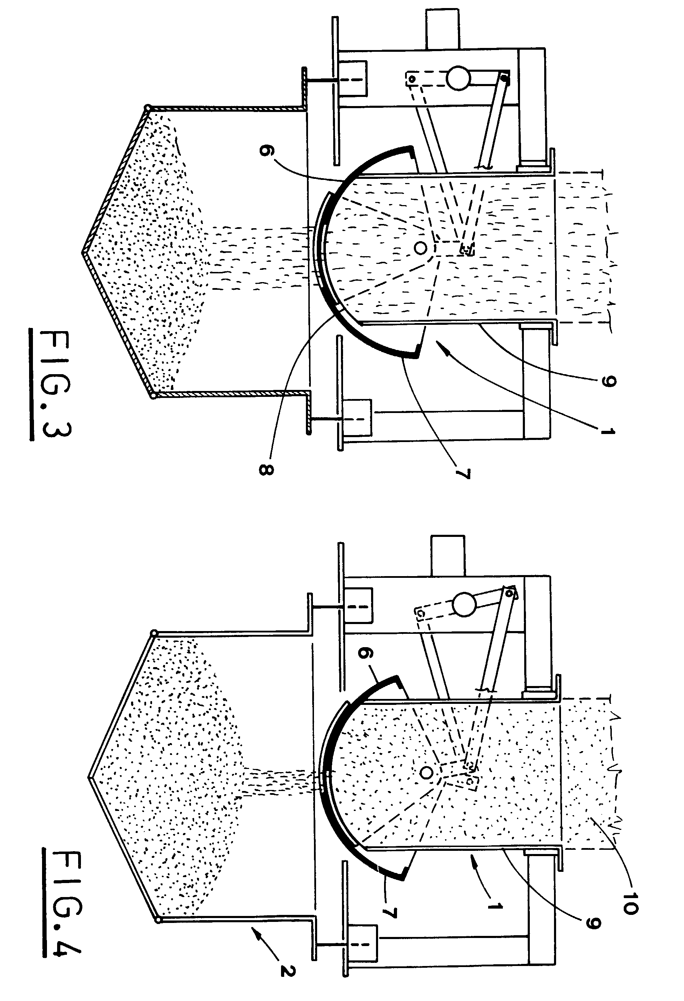

When a predetermined value has been obtained, the shutter gate means 6,7 are made to gradually get near each other by being rotated in opposite directions or, in other words, the discharge mouth 8 of the conveyor means 9 is gradually closed (Fig. 3).

In fact, the indentations 24,25 of the shutter gate means 6,7, placed one opposite the other, cooperate to define an orifice for passage of material, for sake of clarity indicated with 26 in Fig. 8, in axial alignment with the conveyor means 9.

The width of this orifice 26 is changed continuously, so as to reduce gradually the quantity of material 10 fed to the scale 2, as the desired weight on the scale 2 is approached (Fig. 4).

Then this orifice 26 closes completely when the desired weight of material on the scales 2 has been obtained, and the shutter gate means 6,7 have returned to the position in which they overlap each other and the discharge mouth 8 of the conveying means 9 is completely closed.

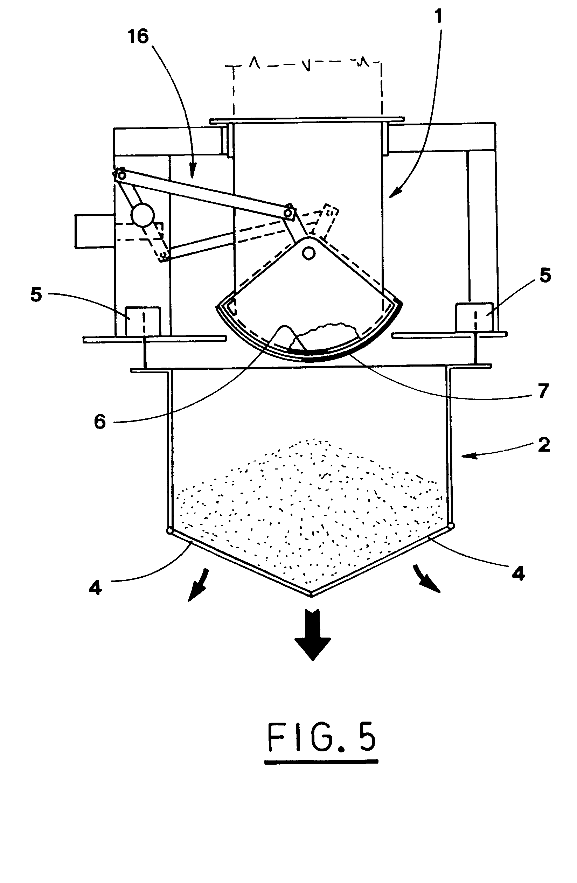

In this configuration it is possible to command the opening of the hatch doors 4 of the scale 2 to unload the weighed material (Fig. 5).

Of course, the present invention can advantageously provide other alternative embodiments of the shutter gate 6,7. For instance, they may have a flat rectangular profile instead of an arc shape. In this case the shutter gate means 6,7 would be carried slidingly on horizontal surfaces situated one over the other and directly below the discharge mouth 8.

The shutter gate means 6,7 may also include a single shutter gate 6, featuring its own indentation 24, supported with possibility of oscillating or sliding and designed to close with continuity the discharge mouth 8 of the conveyor means 9.

Therefore, the subject device allows to feed a scale with a perfectly measured quantity of material.

In fact, feeding with the material is progressively reduced in the final weighing step, until the discharge mouth 8 of the conveyor means 9 is completely closed, so as to carry out the measuring on the base of the quantity that is actually weighed.

This allows to avoid measuring errors resulting from the outflowing material, as it practically does not flow when the discharge mouth 8 is completely closed.

Also the cusp conformation of the indentations 24, 25, contributes significantly to the above mentioned result, because it reduces the passage orifice 26 to a hole at the closing moment.

Obviously, also any perturbation of the measuring carried on by the loading cells, caused by the material flowing onto the scales, is avoided, therefore, no deviations with respect to the real value occur.

Moreover, the passage orifice 26 is constantly coaxial with the conveyor means 9 and with the scales 2 below, so consequently the fed material is always perfectly centred on the same scales 2.

## Claims

1. Improved device for controlling the feeding of flowing material to a scale, characterised in that it includes a pair of shutter gate means (6,7) for closing progressively a bottom discharge mouth (8) of a material conveying means (9) directed to underlying weighing means (2), said shutter gate means (6,7) being supported with a possibility of oscillating in opposite directions from a complete opening position, in which said discharge mouth (8) is open, to a complete closing position, in which said discharge mouth (8) is closed, and vice-versa, said shutter gate means (6,7) featuring each one an indentation (24,25) extending symmetrically from a respective transversal edge to define an orifice (26) for passage of flowing material (10) therethrough, said orifice (26) having a variable cross-section.

2. Device, according to claim 1, characterised in that said shutter gate means (6,7) have an arc shape and are arranged concentric, the first inside the second, supported with possibility of oscillating on a horizontal axle (12) situated on a vertical plane median to said conveyor (9).

3. Device, according to claim 1, characterised in that each of said indentations (24,25) of said shutter gate means (6,7) features a kind of cusp, with the vertex thereof on the respective longitudinal median plane.

4. Device, according to claim 1, characterised in that said orifice (26) is arranged vertically coaxial with said conveyor means (9).

5. Device, according to claim 1, characterised in that said shutter gate means (6,7) are laterally delimited by respective sides (13,14) facing corresponding walls of said conveyor means (9).

6. Device, according to claim 1, characterised in that said shutter gate means (6,7) are operated by at least one actuator member (15) via a mechanism (16).

7. Device, according to claim 6, characterised in that said actuator member (15) includes a step motor and in that said mechanism (16) is equipped with at least one pair of cranks (17,18) fastened, in diametrically opposite positions, to a shaft (19), and articulated to respective connecting rods (20,21).

8. Device, according to claim 1, characterised in that said shutter gate means (6,7) have a flat profile and are operated slidingly in opposite directions.

9. Device, according to claim 1, characterised in that said shutter gate means (6,7) includes a single shutter gate (6) supported with possibility of oscillating for opening and closing progressively and with continuity the orifice (26), in cooperation with the lower extremity of said conveyor means (9).
